# EUROPEAN PATENT APPLICATION

(11) **EP 4 424 731 A1**
(43) Date of publication of application: **04.09.2024**
(21) Application number: 22886949.1
(22) Date of filing: 24.10.2022
(51) Int. Cl.: C08F 222/40, C08F 8/30, C08F 8/34, C08F 220/10, G02F 1/361

(54) **NONLINEAR OPTICALLY ACTIVE COPOLYMER**

(30) Priority: 29.10.2021 JP 2021177966
(71) Applicant: Kyushu University, National University Corporation, Nishi-ku Fukuoka-shi Fukuoka 819-0395 (JP); Nissan Chemical Corporation, Tokyo 103-6119 (JP)
(72) Inventor: YOKOYAMA, Shiyoshi, Fukuoka-shi, Fukuoka 819-0395 (JP); KASHINO, Tsubasa, Funabashi-shi, Chiba 274-0052 (JP)
(74) Representative: Hoffmann Eitle
(86) International application number: PCT/JP2022/039523
(87) International publication number: WO 2023/074622

(57) **Abstract**

There is provided a nonlinear optically active copolymer which achieves both high glass transition temperature (Tg) and higher denseness of a nonlinear optical dye, the copolymer comprising at least a repeating unit A of Formula [1] and a repeating unit B of Formula [2] having a nonlinear optically active moiety in the same molecule: 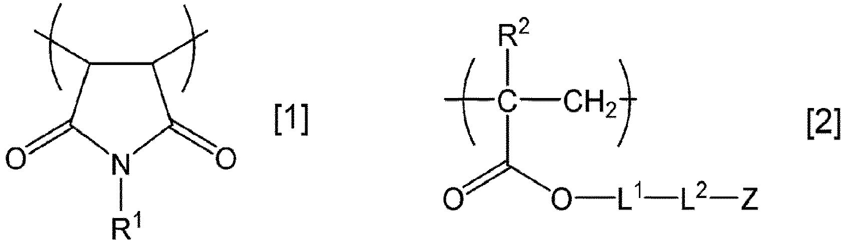 (wherein R¹ is a C₁₋₆ alkyl group, a C₇₋₁₂ aralkyl group, a C₄₋₈ cycloalkyl group, a C₆₋₁₄ aliphatic crosslinked ring group or a C₆₋₁₄ aryl group,
R² is a hydrogen atom or a methyl group,
L¹ is a C₁₋₃₀ divalent hydrocarbon group that arbitrarily contains an ether bond and/or an ester bond,
L² is * -NHC(=O)O-, * -C(=O)NH- or * -C(=O)O- (* is a coupling end with respect to L¹), and
Z is an atomic group that exhibits nonlinear optical activity).

## Description

### TECHNICAL FIELD

The present invention relates to a nonlinear optically active copolymer having an organic nonlinear optically active moiety used in optical switches, optical information processing such as optical modulation, optical communication and the like, and specifically, relates to a nonlinear optically active copolymer having a structure derived from an organic nonlinear optical compound in side chains and an organic nonlinear optical material using the copolymer.

### BACKGROUND ART

In recent years, various electronic elements using nonlinear optical materials have been developed in the fields of optical information processing and optical communication. Among these nonlinear optical materials, materials that produce a first-order electro-optical effect (Pockels effect) due to a second-order nonlinear optical effect are expected to be applied to optical switches and optical modulation.

Among nonlinear optical materials having the Pockels effect, inorganic nonlinear optical materials such as lithium niobate have already been put into practice and are being widely used. With the recent development of the information society, more advanced information processing is required, and the development of organic nonlinear optical materials having excellent performance such as higher nonlinear optical properties and high speed response instead of inorganic materials is desirable.

Among organic nonlinear optical materials, polymer-based materials can be more easily formed into films by a casting method, a dipping method, a spin coating method or the like, and have been focused on because of their ease of processing when devices are produced.

As such polymer-based organic nonlinear optical materials, a form in which an organic dye compound exhibiting a nonlinear optical effect is dispersed in a polymer matrix and a form in which organic dye monomers are introduced into the main chain or side chains of a polymer compound are considered. Among these, when a polymer material in which organic dye monomers are introduced into the main chain or side chains can be formed into a film with highly concentrated and uniformly dispersed organic dye moieties, since uniform optical properties can be exhibited throughout the film, it can be said that such materials can be excellent materials in consideration of practical use of devices.

For polymer-based organic nonlinear optical materials, in order to achieve a strong nonlinear optical effect, it is desirable for the materials to have a high glass transition temperature (Tg) and to have a large amount of organic dye monomers (organic dye moieties) introduced.

When the Tg is low, the molecular orientation of organic dye moieties, which are oriented at a high temperature and fixed by cooling, gradually relaxes over time, and the nonlinear optical effect decreases. In order to minimize this, for example, proposals have been made to increase the Tg of the polymer by introducing units having a cycloalkane such as an adamantyl group in the side chains into acrylic copolymers and to minimize orientational relaxation of organic dye moieties over time (Patent Document 1 and Patent Document 2).

In addition, Non-Patent Document 1 discloses that, when the concentration of organic dye moieties exhibiting a nonlinear optical effect in the polymer is high, the nonlinear optical effect becomes strong. In polymer materials in which organic dye monomers are introduced into side chains, how to increase the amount of organic dye monomers introduced is important.

### Prior Art Documents

### Patent Documents

Patent Document 1: JP 2017-057415 A
Patent Document 2: WO 2017/159815

### Non-Patent Documents

Non-Patent Document 1: Norman S. Allen, Photochemistry and Photophysics of Polymer Materials, John Wiley & Sons, Inc., 2010

### SUMMARY OF THE INVENTION

### Problem to be Solved by the Invention

As described above, in polymer-based organic nonlinear optical materials, achieving a high Tg and increasing the amount of organic dye moieties introduced are important factors in improving nonlinear optical properties. However, when the abundance proportion of monomer units (units containing adamantyl groups or the like) in the polymer, which contribute to a high Tg, is increased in order to achieve a high Tg, the abundance proportion (introduction ratio) of monomer units having organic dye moieties decreases in contrast, and thus it is not easy to achieve both a high Tg and a large amount of organic dye moieties introduced.

The present invention provides a nonlinear optically active copolymer that achieves both a high glass transition temperature (Tg) and densification of a nonlinear optical dye, and a nonlinear optical material obtained using the copolymer.

### Means for Solving the Problem

The inventors conducted extensive studies in order to achieve the above objects, and as a result, found that, when monomer units derived from N-substituted maleimide monomers are incorporated, both a high Tg and a large amount of organic dye moieties introduced can be achieved, and completed the present invention.

Specifically, the present invention relates to, as a first aspect,
a nonlinear optically active copolymer containing at least a repeating unit A of Formula [1] and a repeating unit B of Formula [2] having a nonlinear optically active moiety in the same molecule: 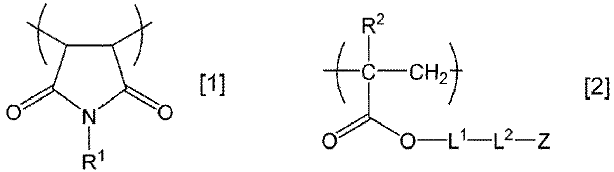 (wherein R¹ is a C₁₋₆ alkyl group, a C₇₋₁₂ aralkyl group, a C₄₋₈ cycloalkyl group, a C₆₋₁₄ aliphatic crosslinked ring group or a C₆₋₁₄ aryl group,
R² is a hydrogen atom or a methyl group,
L¹ is a C₁₋₃₀ divalent hydrocarbon group that arbitrarily contains an ether bond and/or an ester bond,
L² is * -NHC(=O)O-, * -C(=O)NH- or * -C(=O)O- (* is a coupling end with respect to L¹), and
Z is an atomic group that exhibits nonlinear optical activity).

The present invention relates to, as a second aspect, the nonlinear optically active copolymer according to the first aspect, wherein the nonlinear optically active copolymer contains a proportion of 20 to 80 mol% of the repeating unit A of Formula [1] in the same molecule.

The present invention relates to, as a third aspect, the nonlinear optically active copolymer according to the first aspect or the first aspect,
wherein L² is * -NHC(=O)O- (* is a coupling end with respect to L¹).

The present invention relates to, as a fourth aspect, the nonlinear optically active copolymer according to any one of the first aspect to the third aspect,
wherein R¹ is a C₁₋₃ alkyl group, a C₇₋₁₀ aralkyl group, a C₆₋₈ cycloalkyl group, a C₈₋₁₂ aliphatic crosslinked ring group, or a C₆₋₁₀ aryl group.

The present invention relates to, as a fifth aspect, the nonlinear optically active copolymer according to any one of the first aspect to the fourth aspect,
wherein Z is an atomic group having a furan ring group of Formula [3]: 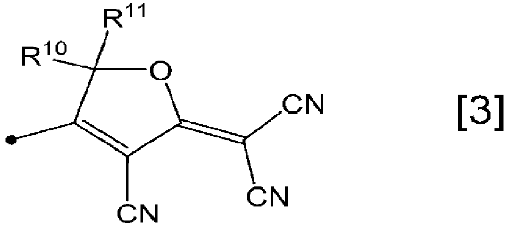 (wherein R¹⁰ and R¹¹ are each independently a hydrogen atom, a C₁₋₅ alkyl group, a C₁₋₅ haloalkyl group, or a C₆₋₁₀ aryl group, and a black dot indicates a bond with a residual structure constituting the atomic group Z that exhibits nonlinear optical activity).

The present invention relates to, as a sixth aspect, the nonlinear optically active copolymer according to the fifth aspect,
wherein Z is an atomic group of a structure of Formula [4] or Formula [5] (in any of R⁴ to R⁹, one hydrogen atom is removed in these chemical formulas): 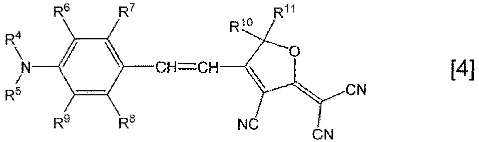 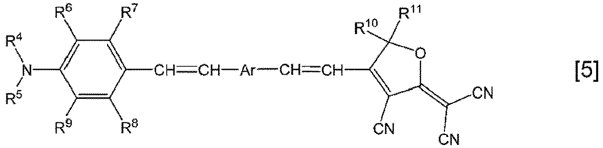 (wherein R⁴ and R⁵ are each independently a hydrogen atom, a C₁₋₁₀ alkyl group that arbitrarily has a substituent, or a C₆₋₁₀ aryl group that arbitrarily has a substituent,
R⁶ to R⁹ are each independently a hydrogen atom, a C₁₋₁₀ alkyl group, a hydroxy group, a C₁₋₁₀ alkoxy group, a C₂₋₁₁ alkylcarbonyloxy group, a C₄₋₁₀ aryloxy group, a C₅₋₁₁ arylcarbonyloxy group, a silyloxy group having a C₁₋₆ alkyl group and/or phenyl group, or a halogen atom,
R¹⁰ and R¹¹ each independently have the same meanings as above, and
Ar is a divalent aromatic group of Formula [6] or Formula [7]); and 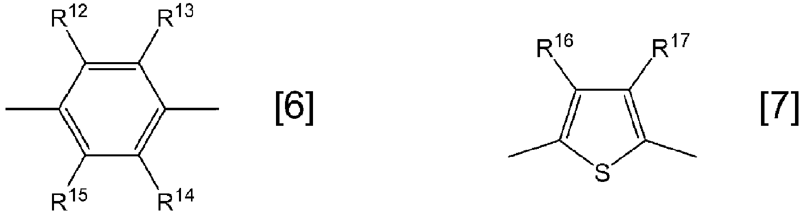 (wherein R¹² to R¹⁷ are each independently a hydrogen atom, a C₁₋₁₀ alkyl group that arbitrarily has a substituent, or a C₆₋₁₀ aryl group that arbitrarily has a substituent).

The present invention relates to, as a seventh aspect, the nonlinear optically active copolymer according to the sixth aspect,
wherein Z is an atomic group of a structure of Formula [4] or Formula [5] (in either R⁴ or R⁵, one hydrogen atom is removed in these chemical formulas).

The present invention relates to, as an eighth aspect, an organic nonlinear optical material comprising the nonlinear optically active copolymer according to any one of the first aspect to the seventh aspect as a part of the material.

The present invention relates to, as a ninth aspect, an electro-optical element comprising the nonlinear optically active copolymer according to any one of the first aspect to the seventh aspect.

The present invention relates to, as a tenth aspect, an optical switching element comprising the nonlinear optically active copolymer according to any one of the first aspect to the seventh aspect.

The present invention relates to, as an eleventh aspect, a varnish comprising the nonlinear optically active copolymer according to any one of the first aspect to the seventh aspect.

The present invention relates to, as a twelfth aspect, a method of producing an organic nonlinear optical material, the method comprising:
a process of applying the varnish according to the eleventh aspect on a surface of a substrate or on an outermost surface of a single layer or multiple layers laminated on the substrate to obtain a coating film; and
a process of applying an electric field to the coating film under heating to orient an atomic group that exhibits nonlinear optical activity in the coating film.

### Effects of the Invention

According to the present invention, it is possible to provide a nonlinear optically active copolymer which achieves a high glass transition temperature (160°C or higher) and has a larger amount of nonlinear optically active moieties introduced than that in the related art by combining a repeating unit having a nonlinear optically active moiety and a repeating unit derived from an N-substituted maleimide monomer.

The nonlinear optically active copolymer having the aforementioned structure of the present invention can be made into an organic nonlinear optical material which can minimize orientational relaxation of nonlinear optical moieties and has excellent nonlinear optical properties.

In addition, since the nonlinear optically active copolymer of the present invention can be dissolved in a solvent to form a varnish and can be easily molded, it has an effect of being suitably used in the field of optoelectronic materials as an optical material having excellent handling properties.

In addition, the organic nonlinear optical material of the present invention can be used to produce an optical device which has a large nonlinear optical constant and is easily moldable.

### MODES FOR CARRYING OUT THE INVENTION

Meanwhile, polymer materials in which organic dye monomers (organic dye moieties) are introduced into the main chain or side chains, including the nonlinear optically active copolymer of the present invention, do not exhibit a nonlinear optical effect when simply formed into a film. This is because the organic dye moieties exhibiting a nonlinear optical effect are completely randomly oriented in the film. In order to exhibit a nonlinear optical effect, first, an element containing a film-formed polymer is heated to around the Tg of the polymer, and a polling process of applying a voltage is then performed in one direction to orient organic dye moieties. Then, cooling is performed to Tg or lower, and movement of molecules is restricted while the organic dye moieties are oriented. Thereby, the polymer maintains its oriented state, and through these operations, the polymer material first exhibits a nonlinear optical effect.

Patent Document 2 discloses the influence of orientational relaxation over time, and this document shows the results that a copolymer having nonlinear optical activity and a Tg of 172.5°C is unlikely to undergo orientational relaxation even after 1,000 hours or longer in a high temperature condition of 85°C. The inventors conducted further studies and determined that, if the Tg of the polymer having nonlinear optical activity is 160°C or higher, orientational relaxation can be minimized even after 1,000 hours at the temperature of 85°C. The conditions of a temperature of 85°C and 1,000 hours are conditions for an acceleration test of a five-year lifespan, which is generally a trial period of a device. That is, when the Tg of the nonlinear optically active polymer is 160°C or higher, orientational relaxation is minimized and the polymer can be determined to be useful as a nonlinear organic polymer material that can withstand practical use.

However, for example, as shown in Patent Document 1, the copolymer disclosed in this document has an aspect that it is still difficult to increase the concentration of organic dye moieties in the polymer when a high Tg is achieved, for example, the Tg finally exceeds 160°C when an abundance proportion of units derived from adamantyl methacrylate is set to 74 mol% or more in order to increase the Tg.

In addition, in addition to performance required for nonlinear optical materials such as a high Tg and a high concentration of organic dye moieties, in consideration of polymer-based materials, as described above, it is desirable that the materials have favorable processability. For example, in order to obtain favorable film-forming properties, it is desirable that the film-formed polymer material be in a non-crystalline amorphous state, since when the material becomes crystalline, a uniform film is not formed, and a phenomenon known as cracking in which a film becomes non-uniform or a part of the film breaks tends to occur. In the technical field of optical materials, which is an object of the present invention, since optical signals are blocked at cracked parts, ability to form a uniform and crack-free film is one important aspect for practical use of optical devices. However, generally, when cycloalkane monomers such as the aforementioned adamantyl methacrylate are introduced at a high concentration, film-forming properties tend to deteriorate. Patent Document 2 discloses that a varnish containing a copolymer into which other monomer units are introduced in addition to a monomer unit having an adamantyl group and a monomer unit having a nonlinear optically active moiety is produced, and the varnish is formed into a film by spin coating and used as a core of an optical waveguide. However, the introduction of other monomer units can make it more difficult to increase the concentration of organic dye moieties.

Thus, the inventors realized a nonlinear optically active copolymer which has a high glass transition temperature (Tg) and can bind a nonlinear optical dye at a high concentration by incorporating monomer units derived from N-substituted maleimide monomers, and found that the copolymer also has advantages such as excellent film-forming properties, and completed the present invention.

Hereinafter, the present invention will be described in detail.

### <Nonlinear optically active copolymer>

The nonlinear optically active copolymer of the present invention is a nonlinear optically active copolymer containing at least a repeating unit A of Formula [1] and a repeating unit B of Formula [2] having a nonlinear optically active moiety in the same molecule.

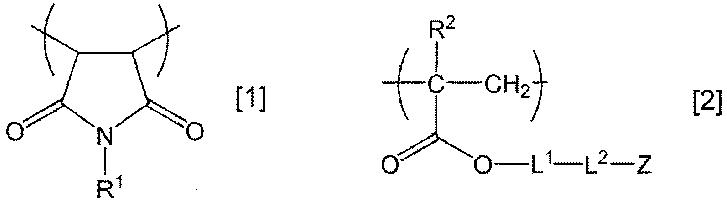

In Formula [1], R¹ is a C₁₋₆ alkyl group, a C₇₋₁₂ aralkyl group, a C₄₋₈ cycloalkyl group, a C₆₋₁₄ aliphatic crosslinked ring group or a C₆₋₁₄ aryl group.

Here, the C₁₋₆ alkyl group may have a branched structure, and examples thereof include methyl group, ethyl group, n-propyl group, isopropyl group, n-butyl group, isobutyl group, sec-butyl group, tert-butyl group, n-pentyl group, neopentyl group, and n-hexyl group.

Examples of C₇₋₁₂ aralkyl groups include phenylmethyl group (benzyl group), 2-phenylethyl group, 3-phenyl-n-propyl group, 4-phenyl-n-butyl group, 5-phenyl-n-pentyl group, and 6-phenyl-n-hexyl group, but the present invention is not limited thereto.

Examples of C₄₋₈ cycloalkyl groups include cyclobutyl group, cyclopentyl group, cyclohexyl group, cycloheptyl group, and cyclooctyl group.

The C₆₋₁₄ aliphatic crosslinked ring group may have an unsaturated double bond, and examples thereof include isobornyl group, dicyclopentanyl group, dicyclopentenyl group, and adamantyl group, and the C₆₋₁₄ aliphatic crosslinked ring group may be a group in which these crosslinked ring groups are bonded to a C₁₋₄ alkyl group.

Here, examples of C₆₋₁₄ aryl groups include phenyl group, tolyl group, xylyl group, naphthyl group, anthryl group, and phenanthryl group.

Among these, R¹ is preferably a C₁₋₃ alkyl group, a C₇₋₁₀ aralkyl group, a C₆₋₈ cycloalkyl group, a C₈₋₁₂ aliphatic crosslinked ring group, or a C₆₋₁₀ aryl group, and among these, an ethyl group, phenylmethyl group (benzyl group), cyclohexyl group, adamantyl group, or phenyl group is preferable, and R¹ is particularly preferably a cyclohexyl group.

In Formula [2], R² is a hydrogen atom or a methyl group.

In Formula [2], L¹ is a C₁₋₃₀ divalent hydrocarbon group that arbitrarily contains an ether bond and/or an ester bond.

Here, the C₁₋₃₀ divalent hydrocarbon group may be either an aliphatic group or an aromatic group, and the aliphatic group may be linear, branched, or cyclic. Among these, an aliphatic group is preferable, and a C₁₋₆ alkylene group is more preferable.

Examples of such C₁₋₃₀ divalent hydrocarbon groups include linear aliphatic groups such as methylene group, ethylene group, trimethylene group, tetramethylene group, pentamethylene group, hexamethylene group, octane-1,8-diyl group, decane-1,10-diyl group, icosane-1,20-diyl group, and triacontane-1,30-diyl group; branched aliphatic groups such as methylethylene group, 1-methyltrimethylene group, and 2,2-dimethyltrimethylene group; cyclic aliphatic groups such as cyclopentane-1,3-diyl group, cyclo hexane-1,4-diyl group, tricyclo[5.2.1.0^{2,6}]decanediyl group, adamantanediyl group, norbornanediyl group, and norbornenediyl group; and aromatic groups such as phenylene group and naphthalenediyl group.

In Formula [2], L² is * -NHC(=O)O-, * -C(=O)NH- or * -C(=O)O- (* is a coupling end with respect to L¹).

Among these, L² is preferably * -NHC(=O)O- (* is a coupling end with respect to L1).

In Formula [2], Z is an atomic group that exhibits nonlinear optical activity.

The atomic group that exhibits nonlinear optical activity is an atomic group derived from an organic nonlinear optical compound. The organic nonlinear optical compound is a π-conjugated compound having an electron donating group at one end of a π-conjugated chain and an electron withdrawing group at the other end, and one having a large molecular hyperpolarizability β is desirable. Examples of electron donating groups include dialkylamino group, and examples of electron withdrawing groups include cyano group, nitro group, and fluoroalkyl group.

Among these, in the present invention, a preferable atomic group that exhibits nonlinear optical activity includes, for example, an atomic group having a furan ring group of the following Formula [3].

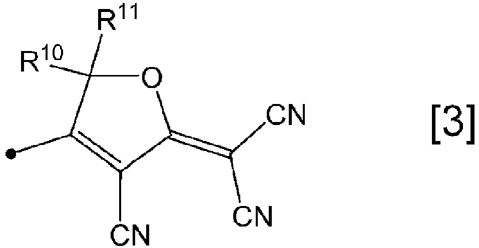

In the formula, R¹⁰ and R¹¹ are each independently a hydrogen atom, a C₁₋₅ alkyl group, a C₁₋₅ haloalkyl group, or a C₆₋₁₀ aryl group, and a black dot (•) indicates a bond with the residual structure constituting the atomic group Z that exhibits nonlinear optical activity.

Specifically, examples of preferable atomic groups (Z) that exhibit the aforementioned nonlinear optical activity include an atomic group having a functional group derived from a structure of the following Formula [4] and an atomic group having a functional group derived from a structure of the following Formula [5]. That is, the atomic group (Z) is preferably an atomic group of a structure of Formula [4] or Formula [5] (in any of R⁴ to R⁹, one hydrogen atom is removed in these chemical formulas).

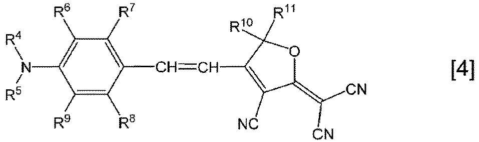

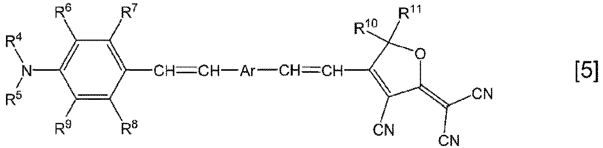

In Formula [4] or Formula [5], R⁴ and R⁵ are each independently a hydrogen atom, a C₁₋₁₀ alkyl group that arbitrarily has a substituent, or a C₆₋₁₀ aryl group that arbitrarily has a substituent.

Here, the C₁₋₁₀ alkyl group may have a branched structure or a cyclic structure, or may be an arylalkyl group. Specific examples thereof include methyl group, ethyl group, n-propyl group, isopropyl group, cyclopropyl group, n-butyl group, isobutyl group, sec-butyl group, tert-butyl group, n-pentyl group, neopentyl group, cyclopentyl group, n-hexyl group, cyclohexyl group, n-octyl group, n-decyl group, 1-adamantyl group, benzyl group, and phenethyl group.

Examples of C₆₋₁₀ aryl groups include phenyl group, tolyl group, xylyl group, and naphthyl group.

Examples of the substituents include amino group; hydroxy group; carboxy group; epoxy group; alkoxycarbonyl groups such as methoxycarbonyl group and tert-butoxycarbonyl group; silyloxy groups such as trimethylsilyloxy group, tert-butyldimethylsilyloxy group, tert-butyldiphenylsilyloxy group, and triphenylsilyloxy group; and halogen atoms such as fluoro group, chloro group, bromo group, and iodo group.

Here, the bond of the atomic group (Z) is preferably a bond in which one hydrogen atom is removed from R⁴ or R⁵.

In Formula [4] or Formula [5], R⁶ to R⁹ are each independently a hydrogen atom, a C₁₋₁₀ alkyl group, a hydroxy group, a C₁₋₁₀ alkoxy group, a C₂₋₁₁ alkylcarbonyloxy group, a C₄₋₁₀ aryloxy group, a C₅₋₁₁ arylcarbonyloxy group, a silyloxy group having a C₁₋₆ alkyl group and/or phenyl group, or a halogen atom.

Here, examples of C₁₋₁₀ alkyl groups include the groups exemplified for R⁴ and R⁵.

Examples of C₁₋₁₀ alkoxy groups include groups in which the C₁₋₁₀ alkyl group is bonded via an oxygen atom.

Examples of C₂₋₁₁ alkylcarbonyloxy groups include groups in which the C₁₋₁₀ alkyl group is bonded via a carbonyloxy group.

Examples of C₄₋₁₀ aryloxy groups include phenoxy group, naphthalen-2-yloxy group, furan-3-yloxy group, and thiophene-2-yloxy group.

Examples of C₅₋₁₁ arylcarbonyloxy groups include benzoyloxy group, 1-naphthoyloxy group, furan-2-carbonyloxy group, and thiophene-3-carbonyloxy group.

Examples of silyloxy groups having a C₁₋₆ alkyl group and/or phenyl group include trimethylsilyloxy group, tert-butyldimethylsilyloxy group, tert-butyldiphenylsilyloxy group, and triphenylsilyloxy group.

Examples of halogen atoms include fluoro group, chloro group, bromo group, and iodo group.

In Formula [4] or Formula [5], R¹⁰ and R¹¹ each independently have the same meanings as R¹⁰ and R¹¹ in Formula [3], that is, are each independently a hydrogen atom, a C₁₋₅ alkyl group, a C₁₋₅ haloalkyl group, or a C₆₋₁₀ aryl group.

Here, the C₁₋₅ alkyl group may have a branched structure or a cyclic structure, and examples thereof include methyl group, ethyl group, n-propyl group, isopropyl group, cyclopropyl group, n-butyl group, isobutyl group, sec-butyl group, tert-butyl group, cyclobutyl group, n-pentyl group, neopentyl group, and cyclopentyl group.

The C₁₋₅ haloalkyl group may have a branched structure or a cyclic structure, and examples thereof include fluoromethyl group, trifluoromethyl group, bromodifluoromethyl group, 2-chloroethyl group, 2-bromoethyl group, 1,1-difluoroethyl group, 2,2,2-trifluoroethyl group, 1,1,2,2-tetrafluoroethyl group, 2-chloro-1,1,2-trifluoroethyl group, pentafluoroethyl group, 3-bromopropyl group, 2,2,3,3-tetrafluoropropyl group, 1,1,2,3,3,3-hexafluoropropyl group, 1,1,1,3,3,3-hexafluoropropan-2-yl group, 3-bromo-2-methylpropyl group, 2,2,3,3-tetrafluorocyclopropyl group, 4-bromobutyl group, perfluoropentyl group, and perfluorocyclopentyl group.

Examples of C₆₋₁₀ aryl groups include phenyl group, tolyl group, xylyl group, and naphthyl group.

In Formula [4] or Formula [5], Ar is a divalent aromatic group of the following Formula [6] or Formula [7].

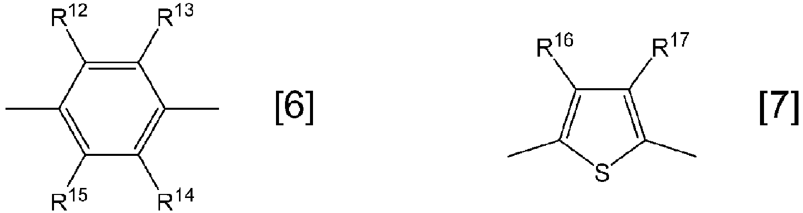

In Formula [6] and Formula [7], R¹² to R¹⁷ are each independently a hydrogen atom, a C₁₋₁₀ alkyl group that arbitrarily has a substituent, or a C₆₋₁₀ aryl group that arbitrarily has a substituent.

Here, examples of C₁₋₁₀ alkyl groups, C₆₋₁₀ aryl groups, and substituents include the groups exemplified in R⁴ and R⁵.

In addition, the nonlinear optically active copolymer of the present invention may contain repeating units other than the repeating unit A of Formula [1] and the repeating unit B of Formula [2] having a nonlinear optically active moiety (referred to as other repeating units).

For example, in order to adjust the content of the nonlinear optically active moiety, the repeating units forming a polymer matrix can be introduced into the nonlinear optically active copolymer. In addition, in order to contribute to improving solvent resistance and minimizing orientational relaxation in a molded product (cured film) obtained from the copolymer, a repeating unit having a structure that can be thermally cured (crosslinked) can be introduced into the nonlinear optically active copolymer in order to enable formation of a molded product by thermal curing. Alternatively, in order to adjust the glass transition temperature, a repeating unit containing a cycloalkane such as an adamantyl ring may be introduced into the nonlinear optically active copolymer.

Regarding these other repeating units, considering that the nonlinear optically active copolymer of the present invention is used as an optically active material, for example, as a core of an optical waveguide, it is desirable to select one having a structure that does not have a large adverse effect on the transparency or moldability of the copolymer.

In the repeating units forming the polymer matrix, examples of polymer matrixes include resins such as polymethyl methacrylate, polycarbonate, polystyrene, silicone resins, epoxy resins, polysulfone, polyether sulfone, and polyimide.

When such repeating units forming the polymer matrix are introduced into the nonlinear optically active copolymer, the nonlinear optically active polymer of the present invention may have a form in which the repeating unit A of Formula [1], the repeating unit B of Formula [2] having a nonlinear optically active moiety, and the repeating unit of the polymer matrix are copolymerized.

In the repeating unit having a structure that can be thermally cured (crosslinked), preferable examples of thermally curable (crosslinkable) structures include an isocyanate group protected with a blocking agent. The blocking agent is not particularly limited as long as it can perform dissociation (deblocking) by heating and reproduce an active isocyanate group, and examples thereof include phenols such as phenol, o-nitrophenol, p-chlorophenol, and o-, m- or p-cresol; alcohols such as methanol, ethanol, isopropanol, n-butanol, 2-ethoxyhexanol, 2-N,N-dimethylaminoethanol, 2-ethoxyethanol, and cyclohexanol; active methylene group-containing compounds such as dimethyl malonate, diethyl malonate, and methyl acetoacetate; oximes such as acetone oxime, methyl ethyl ketone oxime, methyl isobutyl ketone oxime, cyclohexanone oxime, acetophenone oxime, and benzophenone oxime; lactams such as ε-caprolactam; pyrazoles such as pyrazole, 3,5-dimethylpyrazole, and 3-methylpyrazole; and thiols such as dodecanthiol and benzenethiol.

Examples of repeating units having a structure that can be thermally cured (crosslinked) include a repeating unit of the following Formula [8].

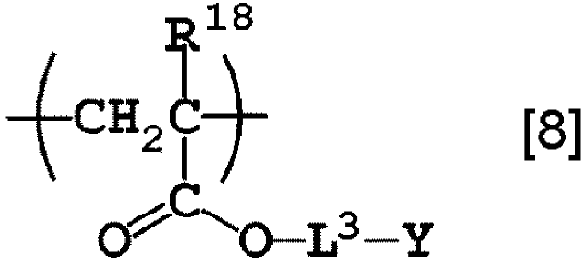

In Formula [8], R¹⁸ is a hydrogen atom or a methyl group, L³ is a C₁₋₃₀ divalent hydrocarbon group that arbitrarily contains an ether bond and/or an ester bond, and Y is an isocyanate group protected with a blocking agent.

Examples of C₁₋₃₀ divalent hydrocarbon groups for L³ include the same groups as the groups exemplified for L¹.

In the repeating unit containing a cycloalkane, the cycloalkane is not particularly limited, and examples thereof include monocyclic rings and condensed rings, and these rings may be crosslinked. Examples of condensed rings include bicyclo rings and tricyclo rings. In addition, examples of crosslinked rings include dicyclopentane and adamantyl.

The average molecular weight of the nonlinear optically active copolymer containing at least the repeating unit A of Formula [1] and the repeating unit B of Formula [2] of the present invention is not particularly limited, and the weight average molecular weight is preferably 10,000 to 1,000,000.

Here, the weight average molecular weight in the present invention is a value measured through gel permeation chromatography (in terms of polystyrene).

In the nonlinear optically active copolymer of the present invention, the proportion of the repeating unit A of Formula [1] in the same molecule is not particularly limited, and may be, for example, a proportion of 1 to 99 mol%, or for example, a proportion of 20 to 80 mol%.

In the nonlinear optically active copolymer of the present invention, the mixing ratio of the repeating unit A of Formula [1] and the repeating unit B of Formula [2] is not particularly limited, and for example, may be A:B=99: 1 to 1:99, 90: 10 to 10:90, 80:20 to 20:80, 70:30 to 50:50, 60:40 to 50:50, or 90:10 to 60:40, in terms of the molar ratio. Considering that, when the mixing proportion of the repeating unit A of Formula [1] increases, a high Tg can be achieved, and the amount of organic dye moieties (the repeating unit B of Formula [2]) introduced increases, the molar ratio A:B may be, for example, 80:20 to 20:80, 90:10 to 60:40, or 60:40 to 40:60.

In addition, when the copolymer contains the other repeating units, the mixing ratio of the repeating unit A of Formula [1] and the other repeating units is not particularly limited, and may be, for example, A:other repeating units =99:1 to 10:90, 80:20 to 10:90, 75:25 to 10:90, 60:40 to 10:90, or 95:5 to 30:70, in terms of the molar ratio. In addition, in this case, the ratio may be a ratio of the total number of moles of the repeating unit A of Formula [1] and the other repeating units to the number of moles of the repeating unit B of Formula [2].

### <Method of producing nonlinear optically active copolymer>

The nonlinear optically active copolymer containing at least the repeating unit A of Formula [1] and the repeating unit B of Formula [2] of the present invention can be obtained by, for example, copolymerizing N-substituted maleimide with a (meth)acrylic acid derivative having a functional group into which a nonlinear optically active moiety can be introduced, and then reacting a compound having a nonlinear optically active moiety with the functional group. Examples of functional groups for introducing a desired moiety include isocyanate group, hydroxy group, carboxy group, epoxy group, amino group, halogenated allyl group, and halogenated acyl group, and in the present invention, a nonlinear optically active moiety is preferably introduced using an isocyanate group to obtain a repeating unit B of Formula [2].

For example, N-substituted maleimide is reacted with a (meth)acrylic acid derivative having an isocyanate group, and then reacted with a compound that has a functional group that can react with an isocyanate group and a nonlinear optically active moiety in the same molecule, and thus the nonlinear optically active copolymer of the present invention can be produced.

The functional group that can react with the isocyanate group is not particularly limited, and examples thereof include groups having active hydrogen such as hydroxy groups, amino groups, and carboxy groups and epoxy groups that can generate active hydrogen. In addition, examples of the nonlinear optically active moieties include moieties derived from the organic nonlinear optical compound exemplified in the description of Z (atomic group that exhibits nonlinear optical activity) in Formula [2]. A moiety having a furan ring group of Formula [3] is preferable.

For example, examples of compounds that have a functional group that can react with an isocyanate group and a nonlinear optically active moiety in the same molecule include the compound of Formula [4] and the compound of Formula [5], and a hydroxy group and the like present in this compound are reacted with an isocyanate group, and thus the repeating unit B of Formula [2] can be obtained.

### <Varnish>

When the nonlinear optically active copolymer of the present invention is used as a nonlinear optical material, it is generally used in the form of a thin film. The method of producing the thin film is preferably a wet application method in which the nonlinear optically active copolymer of the present invention is dissolved in a suitable organic solvent to form a varnish, and the varnish is applied onto a substrate such as a suitable substrate (for example, a silicon/silicon dioxide coated substrate, a silicon nitride substrate, a substrate coated with a metal, for example, aluminum, molybdenum, or chromium, a glass substrate, a quartz substrate, an ITO substrate, etc.) or a film (for example, a resin film such as a triacetylcellulose film, a polyester film, and an acrylic film) by spin coating, flow coating, roll coating, slit coating, spin coating following slit, inkjet coating, printing or the like to form a film. Here, the varnish is also an object of the present invention.

Here, the solvent used for preparing the varnish is one that dissolves the nonlinear optically active copolymer containing at least the repeating unit A of Formula [1] and the repeating unit B of Formula [2] and dissolves optionally added additives to be described below, and the type and structure thereof are not particularly limited as long as it has such a dissolving ability.

Examples of preferable organic solvents include tetrahydrofuran, methyl tetrahydrofuran, 1,4-dioxane, diethylene glycol dimethyl ether, acetone, methyl ethyl ketone, cyclopentanone, cyclohexanone, ethyl acetate, cyclohexanol, 1,2-dichloroethane, chloroform, toluene, chlorobenzene, xylene, N,N-dimethylformamide, N,N-dimethylacetamide, dimethyl sulfoxide, chlorobenzene, and propylene glycol monomethyl ether. These solvents can be used alone or two or more thereof can be used in combination.

Among these solvents, tetrahydrofuran, cyclopentanone, chloroform and the like are preferable in consideration of high solubility of the copolymer containing at least the repeating units A and B of Formula [1] and Formula [2], and favorable coating properties.

The proportion of the solid content in the varnish is, for example, 0.5 to 30% by mass, or for example, 5 to 30% by mass. The solid content here is a mass of the substance (nonlinear optically active copolymer and optionally added additives to be described below) obtained from removing the solvent from the varnish.

Therefore, the prepared varnish is preferably used after being filtered using a filter having a pore size of about 0.2 µm.

Here, when the nonlinear optically active copolymer of the present invention contains, for example, a repeating unit of Formula [8] as another repeating unit, the thin film (molded product) formed from the varnish can be thermally cured (crosslinked). Specifically, when a blocking agent that protects an isocyanate group is dissociated (deblocked) by heating, active isocyanate groups are reproduced, the active isocyanate groups react with each other or react with other curing agents (crosslinking agents) for curing (crosslinking).

The curing (crosslinking) temperature is not particularly limited as long as it is a temperature at which the blocking agent that protects the isocyanate group dissociates, and is in a range of generally 100 to 300°C, preferably 120 to 250°C, and more preferably 140 to 200°C.

In addition, the varnish may contain, as necessary, antioxidants such as hydroquinone, ultraviolet absorbing agents such as benzophenone, rheology regulating agents such as silicone oil and surfactants, adhesion aids such as silane coupling agents, polymer matrix crosslinking agents, compatibilizing agents, curing agents, pigments, storage stabilizers, and antifoaming agents as long as the effects of the present invention are not impaired.

### <Electro-optical element, optical switching element>

The nonlinear optically active copolymer of the present invention can be applied as a material for various electro-optical elements that have been proposed in the related art.

Typical examples of electro-optical elements include optical switching elements (optical communication elements) such as a Mach-Zehnder optical modulator. In optical switching elements, a varnish containing the nonlinear optically active copolymer of the present invention is applied onto a substrate such as glass and plastic, and then processed by a lithography method using light or an electron beam, a wet and dry etching method, or a nano-imprinting method to form an optical waveguide structure that can transmit light. Generally, an optical waveguide structure is formed by applying and laminating a material having a refractive index lower than that of a varnish containing the nonlinear optically active copolymer, but the structure thereof is not limited, and the nonlinear optically active copolymer of the present invention (varnish) can also be applied to other optical waveguide structures.

In the Mach-Zehnder optical modulator, which is a typical optical switching element, a high-frequency voltage is applied to one or both of a slit optical waveguide structure to exhibit electro-optical properties, the refractive index is changed, and thus the phase of propagating light changes. This phase change enables high-speed modulation of light by changing the light intensity after splitting and multiplexing.

In addition, the electro-optical element here is not limited to use of phase and intensity modulation, but can be used, for example, as polarization conversion elements and demultiplexing and multiplexing elements.

In addition, the nonlinear optically active copolymer of the present invention can be used not only for communication elements but also for electric field sensors that detect a change in the electric field as a change in the refractive index.

An optical waveguide using a varnish containing the nonlinear optically active copolymer of the present invention as a core material can be produced by, for example, the method disclosed in WO 2016/035823 A1.

### <Organic nonlinear optical material>

In the present invention, a polling process is required in order to exhibit second-order nonlinear optical properties of a material (for example, a thin film) produced using a varnish containing the nonlinear optically active copolymer. The polling process is an operation in which a predetermined electric field is applied when a material is heated to about a temperature that is equal to or higher than the glass transition temperature or equal to or lower than the melting point of the material, the material is cooled when the electric field is maintained, and thus the nonlinear optically active moieties (atomic group that exhibits nonlinear optical activity) contained in the copolymer are oriented. This operation allows the material to exhibit macroscopic nonlinear optical properties.

In the present invention, if the nonlinear optically active copolymer in the form of a varnish is simply formed into a thin film, since the orientation of nonlinear optically active moieties (atomic group that exhibits nonlinear optical activity) is random, heating is performed at a temperature between 15°C, preferably 10°C, lower than the glass transition temperature of the nonlinear optically active copolymer (about 120°C or higher if the nonlinear optically active copolymer does not exhibit a glass transition temperature) and equal to or lower than the melting point to perform a polling process, and nonlinear optical properties are exhibited.

### Examples

Hereinafter, the present invention will be described in more detail with reference to examples, but the present invention is not limited to the following examples.

Here, in examples, devices and conditions used for sample preparation and physical property analysis are as follows.
(1) GPC (gel permeation chromatography)
   Device: commercially available from Shimadzu Corporation
   (GPC system configuration)
   System controller: CBM-20A
   Column oven: CTO-20A
   Automatic sampler: SIL-10AF
   Detector: SPD-20A and RID-10A
   Exhaust unit: DGU-20A3
   GPC column: Shodex (registered trademark) KF-804L and KF-803L
   Column temperature: 40°C
   Solvent: tetrahydrofuran
   Flow rate: 1 mL/min
   Standard sample: 5 types of polystyrene with different weight average molecular weights (197000, 55100, 12800, 3950, 1260)
(2) ¹H NMR spectrum
   Device: Ascend^{™} 500 (commercially available from Bruker)
   Solvent: deuterated chloroform (CDCl₃)
   Internal standard: tetramethylsilane
(3) Differential scanning calorimeter (DSC): measurement of glass transition point (Tg)
   Device: DSC 204 F1 Phoenix (registered trademark, commercially available from Netch Japan Co., Ltd.)
   Measurement condition: under a nitrogen atmosphere
   Heating rate: 10°C/min
   Temperature cycle condition: (heating from 30°C to 200°C, cooling from 200°C to 100°C, and heating from 100°C to 200°C)
   Conditions for determining glass transition point (Tg): the differential inflection point of the DSC curve during second heating was defined as Tg.
(4) Ultraviolet-visible near-infrared absorption spectrum
   Device: UV-3600 spectrophotometer (commercially available from Shimadzu Corporation)
   Solvent: tetrahydrofuran (THF)
   Cell: quartz cell with a length of 1 cm
   Measurement temperature: room temperature
   Measurement wavelength range: 800 nm to 300 nm (0.5 nm interval)

In addition, the abbreviations have the following meanings.
PM: N-phenylmaleimide [IMILEX (registered trademark)-P, commercially available from Nippon Shokubai Co., Ltd.]
CM: N-cyclohexylmaleimide [IMILEX (registered trademark)-C, commercially available from Nippon Shokubai Co., Ltd.]
EM: N-ethylmaleimide [commercially available from Tokyo Chemical Industry Co., Ltd.] BM: N-benzylmaleimide [commercially available from Tokyo Chemical Industry Co., Ltd.]
Sty: styrene [commercially available from Tokyo Chemical Industry Co., Ltd.]
Ada: adamantyl methacrylate [commercially available from Osaka Organic Chemical Industry Ltd.]
NCO: 2-isocyanatoethyl methacrylate [Karenz (registered trademark) MOI, commercially available from Showa Denko K.K.]
Neg: 2-(2-methacryloyloxyethyloxy)ethyl isocyanate [Karenz (registered trademark) MOI-EG, commercially available from Showa Denko K.K.]
AIBN: 2,2'-azobis(isobutyronitrile) [commercially available from FUJIFILM Wako Pure Chemical Corporation]
CPTC: 2-cyano-2-propyldodecyl trithiocarbonate [commercially available from Sigma-Aldrich]
DBTDL: dibutyltin(IV) dilaurate [commercially available from Tokyo Chemical Industry Co., Ltd.]
CPN: cyclopentanone
THF: tetrahydrofuran

The nonlinear optical compound used in the present invention is not particularly limited, and is selected from, for example, among organic dye compounds exhibiting second-order nonlinear optical properties.

### [Reference Example 1] Production of nonlinear optical compound (1)

The following compound [EO-1] was used as a nonlinear optical compound (1) to be introduced into side chains of the polymer. The following compound was produced by the same method as the method disclosed in X. Zhang et al., Tetrahedron Lett., 51, p5823 (2010).

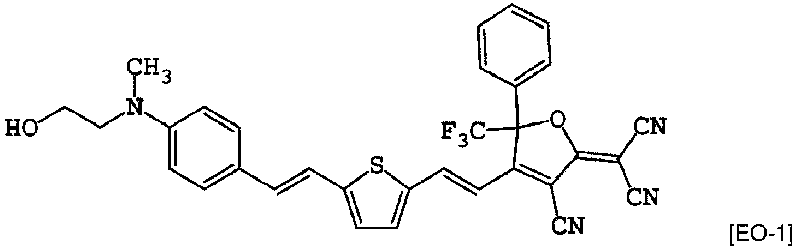

### [Reference Example 2] Production of nonlinear optical compound (2)

The following compound [EO-2] was used as a nonlinear optical compound (2) to be introduced into side chains of the polymer. The following compound was produced by the following method.

N-methyl-N-(2-hydroxyethyl)-4-aminobenzaldehyde (CAS No. 1201-91-8, commercially available from Combi-Blocks) was dissolved in ethanol, impurities were then filtered, and reprecipitation was performed with toluene for purification.

8.96 g (50 mmol) of purified N-methyl-N-(2-hydroxyethyl)-4-aminobenzaldehyde was dissolved in 50 mL of ethanol. Next, 15.76 g (50 mmol) of [3-cyano-4-methyl-5-phenyl-5-(trifluoromethyl)-2(5H)-furanylidene]-propanedinitrile was put into a round bottom flask, and 350 mL of ethanol was added. The mixture was stirred in an oil bath at 65°C until [3-cyano-4-methyl-5-phenyl-5-(trifluoromethyl)-2(5H)-furanylidene]-propanedinitrile was dissolved. After dissolution, an ethanol solution of N-methyl-N-(2-hydroxyethyl)-4-aminobenzaldehyde was added a small drop at a time. After stirring for 1 hour, the reaction solution was cooled to room temperature, and then stored in a refrigerator controlled at 4°C for 1 day. The reaction solution was filtered, and the filtrate was washed with cold ethanol several times. When the obtained filtrate was dried under a reduced pressure, it was possible to obtain 22.86 g of [EO-02] with a yield of 96%, and an LC purity of 99% or more.

Here, [3-cyano-4-methyl-5-phenyl-5-(trifluoromethyl)-2(5H)-furanylidene]-propanedinitrile (CAS. No. 436097-14-2) synthesized with reference to W. Jin, P. V. Johnston, D. L. Elder, K. T. Manner, K. E. Garrett, W. Kaminsky, R. Xu, B. H. Robinson and L. R. Dalton, Journal of Materials Chemistry C, Issue 4, 2016, page 3119-3124 was used.

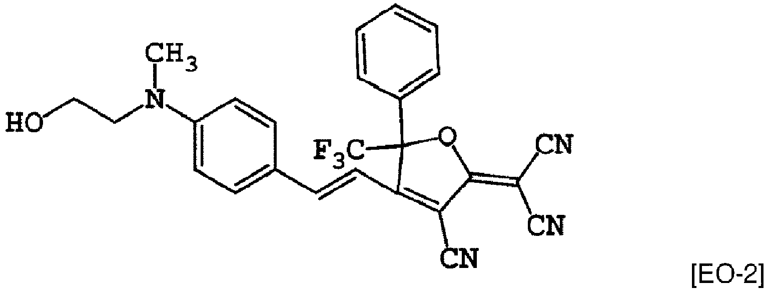

### [Example 1 and Example 2] Production of nonlinear optically active polymer (EOP-P-50, EOP-P-60)

### (1) Production of precursor polymer

6.92 g (40 mmol) of PM, 6.21 g (40 mmol) of NCO, 52.5 mg (0.32 mmol) of a polymerization initiator AIBN, 0.277 g (0.8 mmol) of a chain transfer agent CPTC, and 50 g of CPN were put into a 200 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (13.3 g, a yield of 89%) for a nonlinear optically active copolymer. The polymerization ratio of PM and NCO in the precursor polymer was PM:NCO=50:50 mol%, as determined by the proton ratio of ¹H NMR, according to the monomer preparation ratio.

### (2) Production of nonlinear optically active copolymer

A flask was charged with 4.0 g (the preparation amount with respect to a total amount of the precursor polymer and the nonlinear optical compound (1): 50% by mass, 6.8 mmol, Example 1), or 6.0 g (60% by mass, 10.2 mmol, Example 2) of the nonlinear optical compound (1) [EO-1] with respect to 4.0 g of the obtained precursor polymer (including about 12.2 mmol of isocyanate groups). Dry THF was added thereto in an amount of 25 parts by mass with respect to the solid content, and the mixture was stirred and uniformly dissolved. 0.2 g of DBTDL (5% by mass with respect to the precursor polymer) was additionally added thereto. Under an inert atmosphere, the mixture was stirred at room temperature to cause a condensation reaction between the isocyanate group of the precursor polymer and the hydroxy group of the nonlinear optical compound (1). When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain a desired nonlinear optically active copolymer having a repeating unit of the following formula: EOP-P-50 (Example 1) and EOP-P-60 (Example 2) with a yield of about 90%.

Here, in the following formulas representing repeating units, the numerical values and signs attached to the repeating units (50, m, 50-m, etc. in the case of Example 1) indicate a molar ratio of respective repeating units (a total of 100). m indicates a molar ratio of repeating units in which the isocyanate group of the precursor polymer and the nonlinear optical compound were reacted. In addition, the molar ratio of repeating units in which unreacted isocyanate groups were reacted with methanol in order to eliminate the unreacted isocyanate groups is expressed as a numerical value obtained by subtracting m from the molar ratio (50 in the case of Example 1) of repeating units having an isocyanate group in the precursor polymer.

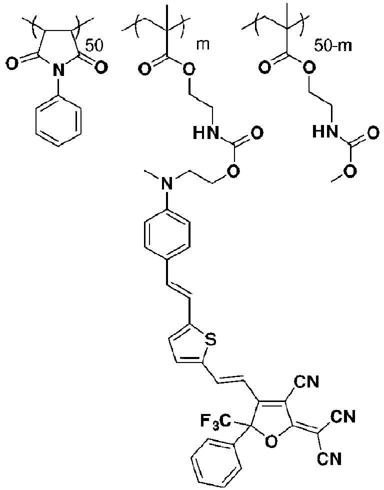

### [Example 3 to Example 5] Production of nonlinear optically active polymer (EOP-C-50, EOP-E-50, EOP-B-50)

Precursor polymers were produced in the same procedure as in Example 1 and Example 2 using CM (Example 3), EM (Example 4), or BM (Example 5), in place of PM used in Example 1 and Example 2. Here, the polymerization ratio in CM, EM, or BM and NCO in the precursor polymer was CM (or EM, BM):NCO=50:50 mol%.

Subsequently, with respect to 2.0 g of each obtained precursor polymer (including about 6.1 mmol of isocyanate groups), 2.0 g of the nonlinear optical compound (1) was added such that the preparation amount with respect to a total amount of the precursor polymer and the nonlinear optical compound (1): 50% by mass, 3.4 mmol, and in the same procedure as in Example 1 and Example 2, nonlinear optically active copolymers having repeating units of the following formula: EOP-C-50 (Example 3), EOP-E-50 (Example 4), and EOP-B-50 (Example 5) with a yield of about 90% were obtained. 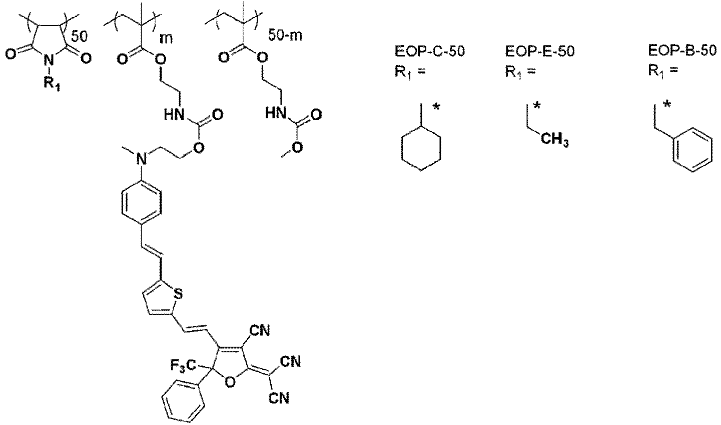
* indicates a bonding site with respect to a N atom

### [Comparative Example 1] Production of nonlinear optically active polymer (EOP-Ada-50)

### (1) Production of precursor polymer

2.20 g (10 mmol) of Ada, 1.55 g (10 mmol) of NCO, 13.1 mg (0.08 mmol) of AIBN, 69.1 mg (0.2 mmol) of CPTC, and 15 g of CPN were put into a 100 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (3.8 g, a yield of 90%) for a nonlinear optically active copolymer. The polymerization ratio of Ada and NCO in the precursor polymer was Ada:NCO=50:50 mol%, as determined by the proton ratio of ¹H NMR, according to the monomer preparation ratio.

### (2) Production of nonlinear optically active copolymer

A flask was charged with 2.0 g of the nonlinear optical compound (1) [EO-1] (the preparation amount with respect to a total amount of the precursor polymer and the nonlinear optical compound (1): 50% by mass, 3.4 mmol) with respect to 2.0 g of the obtained precursor polymer (including about 5.3 mmol of isocyanate groups), 100 g of dry THF was added, and the mixture was stirred and uniformly dissolved. 0.1 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the nonlinear optical compound (1). When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 3.8 g of a desired nonlinear optically active copolymer having a repeating unit of the following formula: EOP-Ada-50 with a yield of about 90%.

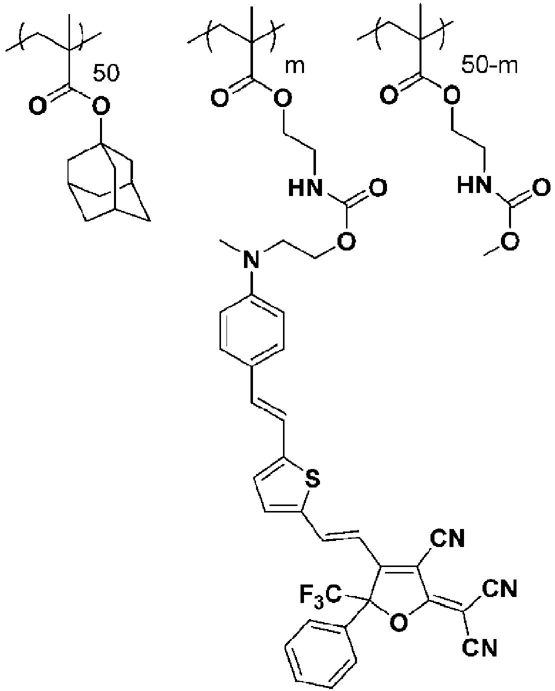

### [Comparative Example 2] Production of nonlinear optically active polymer (EOP-Ada-30)

### (1) Production of precursor polymer

3.30 g (15 mmol) of Ada, 0.78 g (5 mmol) of NCO, 13.1 mg (0.08 mmol) of AIBN, 69.1 mg (0.2 mmol) of CPTC, and 15 g of CPN were put into a 100 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (3.75 g, a yield of 88%) for a nonlinear optically active copolymer. The polymerization ratio of Ada and NCO in the precursor polymer was Ada:NCO=75:25 mol%, as determined by the proton ratio of ¹H NMR, according to the monomer preparation ratio.

### (2) Production of nonlinear optically active copolymer

A flask was charged with 0.86 g of the nonlinear optical compound (1) [EO-1] (the preparation amount with respect to a total amount of the precursor polymer and the nonlinear optical compound (1): 30% by mass, 1.5 mmol) with respect to 2.0 g of the obtained precursor polymer (including about 2.5 mmol of isocyanate groups), 100 g of dry THF was added and the mixture was stirred and uniformly dissolved. 0.1 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the nonlinear optical compound (1). When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 2.9 g of a desired nonlinear optically active copolymer having a repeating unit of the following formula: EOP-Ada-30 with a yield of about 93%.

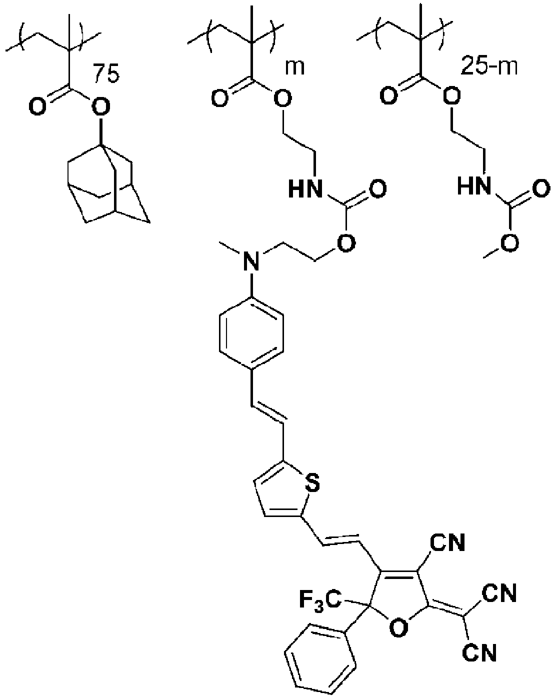

### [Example 6] Production of nonlinear optically active polymer (EOP-CS-40)

### (1) Production of precursor polymer

8.96 g (50 mmol) of CM, 3.88 g (25 mmol) of NCO, 2.56 g (25 mmol) of Sty, 70.0 mg (0.4 mmol) of AIBN, 0.35 g (1.0 mmol) of CPTC, and 80 g of dry THF were put into a 300 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (18.5 g, a yield of 93%) for a nonlinear optically active copolymer. The polymerization ratio of CM, Sty and NCO in the precursor polymer was CM:Sty:NCO=50:25:25 mol%, as determined by the proton ratio of ¹H NMR, according to the monomer preparation ratio.

### (2) Production of nonlinear optically active copolymer

A flask was charged with 6.67 g of the nonlinear optical compound (1) [EO-1] (the preparation amount with respect to a total amount of the precursor polymer and the nonlinear optical compound (1): 40% by mass, 11.4 mmol) with respect to 10.0 g of the obtained precursor polymer (including about 16.4 mmol of isocyanate groups), 250 g of dry THF was added, and the mixture was stirred and uniformly dissolved. 0.5 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the nonlinear optical compound (1). When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 15.9 g of a desired nonlinear optically active copolymer having a repeating unit of the following formula: EOP-CS-40 with a yield of about 90%.

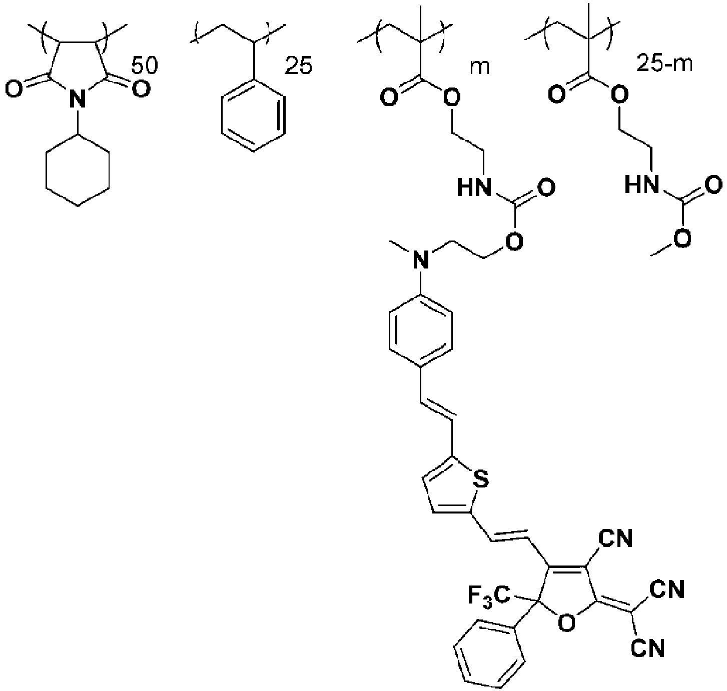

### [Example 7] Production of nonlinear optically active copolymer (EOP-CA-40)

### (1) Production of precursor polymer

8.96 g (50 mmol) of CM, 3.88 g (25 mmol) of NCO, 5.51 g (25 mmol) of Ada, 70.0 mg (0.4 mmol) of AIBN, 0.35 g (1.0 mmol) of CPTC, and 80 g of dry toluene were put into a 300 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (18.5 g, a yield of 93%) for a nonlinear optically active copolymer. The polymerization ratio of CM, Ada and NCO in the precursor polymer was CM:Ada:NCO=50:25:25 mol%, as determined by the proton ratio of ¹H NMR, according to the monomer preparation ratio.

### (2) Production of nonlinear optically active copolymer

A flask was charged with 6.67 g of the nonlinear optical compound (1) [EO-1] (the preparation amount with respect to a total amount of the precursor polymer and the nonlinear optical compound (1): 40% by mass, 11.4 mmol) with respect to 10.0 g of the obtained precursor polymer (including about 13.2 mmol of isocyanate groups), 250 g of dry THF was added, and the mixture was stirred and uniformly dissolved. 0.5 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the EO dye. When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 15.3 g of a desired nonlinear optically active copolymer having a repeating unit of the following formula: EOP-CA-40 with a yield of about 89%.

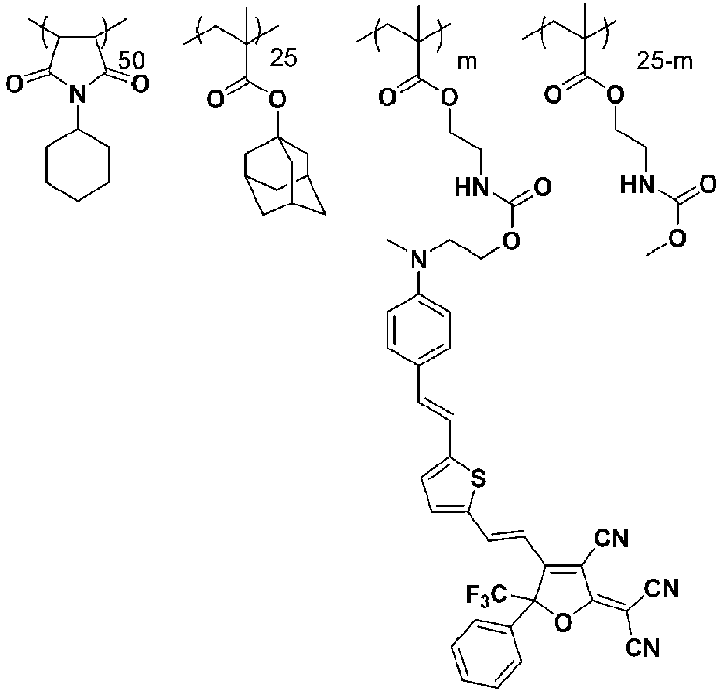

### [Example 8] production of nonlinear optically active copolymer (EOP-C-50)

### (1) Production of precursor polymer

5.38 g (30 mmol) of CM, 4.65 g (30 mmol) of NCO, 39.4 mg (0.24 mmol) of AIBN, 20.7 mg (0.6 mmol) of CPTC, and 40 g of dry toluene were put into a 300 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (10.2 g, a yield of 91%) for a nonlinear optically active copolymer. The polymerization ratio of CM and CM in the precursor polymer was CM:NCO=50:50 mol%, as determined by the proton ratio of ¹H NMR, according to the monomer preparation ratio.

### (2) Production of nonlinear optically active copolymer

A flask was charged with 8.0 g of the nonlinear optical compound (2) [EO-2] (the preparation amount with respect to a total amount of the precursor polymer and the nonlinear optical compound (2): 50% by mass, 16.8 mmol) with respect to 8.0 g of the obtained precursor polymer (including about 23.4 mmol of isocyanate groups), 500 g of dry THF was added, and the mixture was stirred and uniformly dissolved. 0.4 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the nonlinear optical compound (2). When the peak of the unreacted nonlinear optical compound (2) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 13.2 g of a desired nonlinear optically active copolymer having a repeating unit of the following formula: EOP-C-50 with a yield of about 78%.

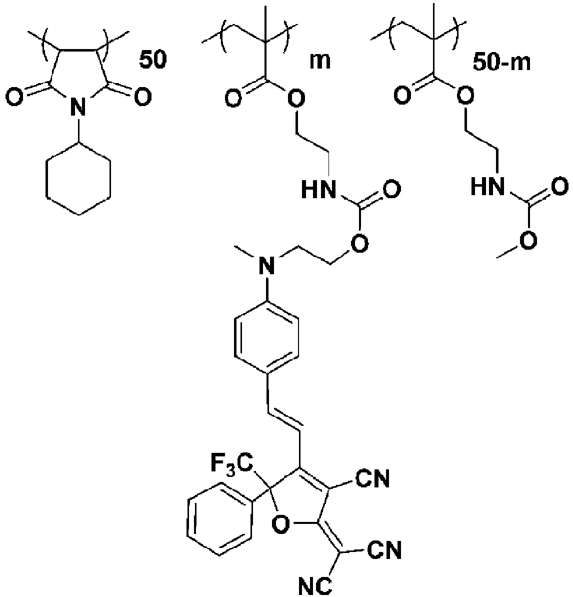

### [Example 9] Production of nonlinear optically active copolymer (EOP-CNe-50)

### (1) Production of precursor polymer

5.38 g (30 mmol) of CM, 5.97 g (30 mmol) of Neg, 39.4 mg (0.24 mmol) of AIBN, 20.7 mg (0.6 mmol) of CPTC, and 50 g of dry toluene were put into a 200 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (10.2 g, a yield of 90%) for a nonlinear optically active copolymer. The polymerization ratio of CM and Neg in the precursor polymer was CM:Neg=50:50 mol%, as determined by the proton ratio of ¹H NMR, according to the monomer preparation ratio.

### (2) Production of nonlinear optically active copolymer

A flask was charged with 8.0 g of the nonlinear optical compound (2) [EO-2] (the preparation amount with respect to a total amount of the precursor polymer and the nonlinear optical compound (2): 50% by mass, 16.8 mmol) with respect to 8.0 g of the obtained precursor polymer (including about 21.1 mmol of isocyanate groups), 500 g of dry THF was added, and the mixture was stirred and uniformly dissolved. 0.4 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the nonlinear optical compound (2). When the peak of the unreacted nonlinear optical compound (2) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 12.4 g of a desired nonlinear optically active copolymer having a repeating unit of the following formula: EOP-CNe-50 with a yield of about 77%.

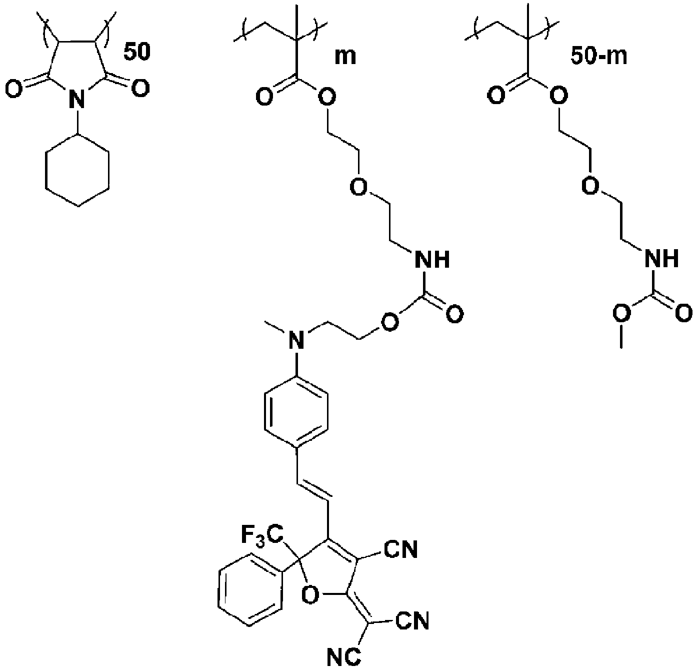

### [Example 10] Production of nonlinear optically active copolymer (EOP-CANe-50)

### (1) Production of precursor polymer

5.38 g (30 mmol) of CM, 3.59 g (18 mmol) of Neg, 2.64 g (12 mmol) of Ada, 39.4 mg (0.24 mmol) of AIBN, 20.7 mg (0.6 mmol) of CPTC, and 50 g of dry toluene were put into a 200 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (11.1 g, a yield of 90%) for a nonlinear optically active copolymer. The polymerization ratio of CM, Neg and Ada in the precursor polymer was CM:Neg:Ada=50:30:20 mol%, as determined by the proton ratio of ¹H NMR, according to the monomer preparation ratio.

### (2) Production of nonlinear optically active copolymer

A flask was charged with 5.3 g of the nonlinear optical compound (2) [EO-2] (the preparation amount with respect to a total amount of the precursor polymer and the nonlinear optical compound (2): 40% by mass, 11.2 mmol) with respect to 8.0 g of the obtained precursor polymer (including about 12.4 mmol of isocyanate groups), 500 g of dry THF was added, and the mixture was stirred and uniformly dissolved. 0.4 g of DBTDL (5% by mass with respect to the precursor polymer) was added thereto. Under an inert atmosphere, the mixture was stirred at room temperature to cause a condensation reaction between the isocyanate group of the precursor polymer and the hydroxy group of the nonlinear optical compound (2). When the peak of the unreacted nonlinear optical compound (2) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 14.4 g of a desired nonlinear optically active copolymer having a repeating unit of the following formula: EOP-CANe-50 with a yield of about 87%.

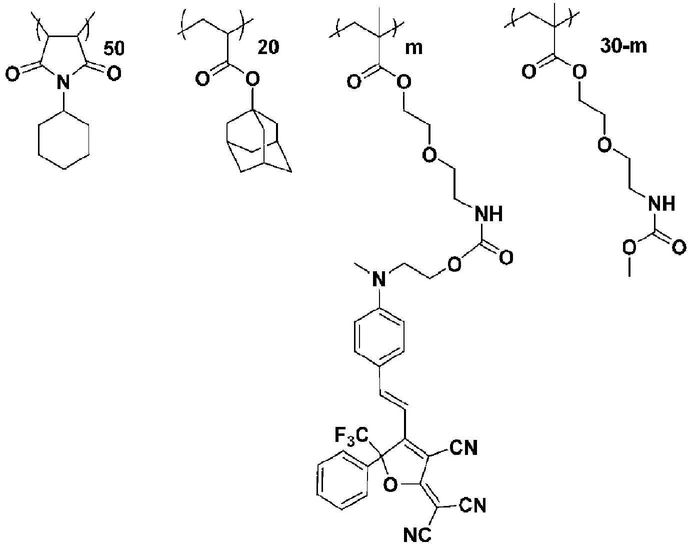

### [Example 11]

### Production of nonlinear optically active polymer (EOP-P31-40)

### (1) Production of precursor polymer

5.19 g (30 mmol) of PM, 1.55 g (10 mmol) of NCO, 26.3 mg (0.16 mmol) of a polymerization initiator AIBN, 0.138 g (0.4 mmol) of a chain transfer agent CPTC, and 30 g of CPN were put into a 200 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (6.3 g, a yield of 92%) for a nonlinear optically active copolymer. The polymerization ratio of PM and NCO in the precursor polymer was PM:NCO=75:25 mol%, as determined by the proton ratio of ¹H NMR, according to the monomer preparation ratio.

### (2) Production of nonlinear optically active copolymer

A flask was charged with 1.33 g of the nonlinear optical compound (1) [EO-1] (the preparation amount with respect to a total amount of the precursor polymer and the nonlinear optical compound (1): 40% by mass, 2.3 mmol) with respect to 2.0 g of the obtained precursor polymer (including about 3.0 mmol of isocyanate groups). Dry THF was added thereto in an amount of 25 parts by mass with respect to the solid content, and the mixture was stirred and uniformly dissolved. 0.1 g of DBTDL (5% by mass with respect to the precursor polymer) was additionally added thereto. Under an inert atmosphere, the mixture was stirred at room temperature to cause a condensation reaction between the isocyanate group of the precursor polymer and the hydroxy group of the nonlinear optical compound (1). When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 2.97 g of a desired nonlinear optically active copolymer having a repeating unit of the following formula: EOP-P31-40 with a yield of about 90%.

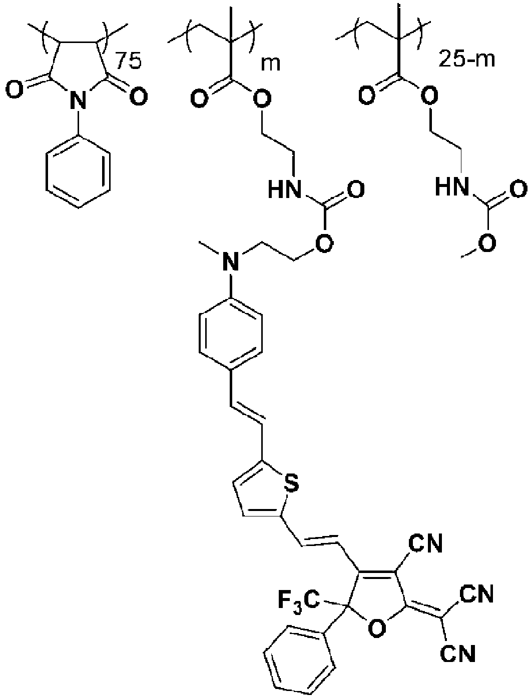

### [Example 12]

### Production of nonlinear optically active polymer (EOP-P13-50)

### (1) Production of precursor polymer

1.73 g (10 mmol) of PM, 4.65 g (30 mmol) of NCO, 26.3 mg (0.16 mmol) of a polymerization initiator AIBN, 0.138 g (0.4 mmol) of a chain transfer agent CPTC, and 30 g of CPN were put into a 200 mL round bottom flask, and after sufficient nitrogen bubbling, the mixture was stirred to obtain a uniform reaction solution. The polymerization reaction was performed in an oil bath at 80°C overnight. After synthesis of the polymer was confirmed by GPC, the reaction solution was cooled to room temperature, and the polymer was precipitated using dry hexane. This precipitate was collected with a filter and dried under a reduced pressure to obtain a precursor polymer (5.9 g, a yield of 89%) for a nonlinear optically active copolymer. The polymerization ratio of PM and NCO in the precursor polymer was PM:NCO=25:75 mol%, as determined by the proton ratio of ¹H NMR, according to the monomer preparation ratio.

### (2) Production of nonlinear optically active copolymer

A flask was charged with 2.0 g of the nonlinear optical compound (1) [EO-1] (the preparation amount with respect to a total amount of the precursor polymer and the nonlinear optical compound (1): 50% by mass, 3.4 mmol) with respect to 2.0 g of the obtained precursor polymer (including about 9.4 mmol of isocyanate groups). Dry THF was added thereto in an amount of 25 parts by mass with respect to the solid content, and the mixture was stirred and uniformly dissolved. 0.1 g of DBTDL (5% by mass with respect to the precursor polymer) was additionally added thereto. Under an inert atmosphere, the mixture was stirred at room temperature to cause a condensation reaction between the isocyanate group of the precursor polymer and the hydroxy group of the nonlinear optical compound (1). When the peak of the unreacted nonlinear optical compound (1) disappeared or no decrease in the peak was observed through GPC, methanol was added to eliminate the unreacted isocyanate group.

After the reaction was completed, THF was concentrated, and the polymer was precipitated with a large amount of methanol. The precipitate was collected with a filter and sufficiently dried to obtain 3.4 g of a desired nonlinear optically active copolymer having a repeating unit of the following formula: EOP-P31-20 with a yield of about 85%.

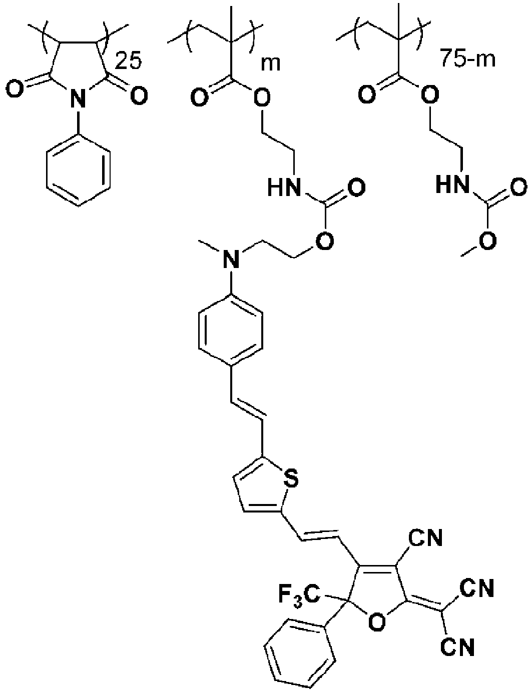

Table 1 shows the types and molar ratios of monomer components used to prepare precursor polymers and the types of nonlinear optical compounds and the amounts of the nonlinear optical compounds prepared for the nonlinear optically active copolymers prepared in the examples and comparative examples. Here, the amount of the nonlinear optical compound prepared indicates an amount of the nonlinear optical compound prepared (% by mass) with respect to a total amount (mass) of the precursor polymer and the nonlinear optical compound.

In addition, the ultraviolet-visible near-infrared absorption spectrum of the nonlinear optically active copolymer was measured, the content of the structure derived from the nonlinear optical compound in the copolymer determined from the maximum absorption intensity was determined as an introduction rate [% by mass] of the nonlinear optical compound in the nonlinear optically active copolymer, and
the reaction conversion rate of the nonlinear optical compound was expressed as a ratio of the introduction rate [%] of the nonlinear optical compound in the nonlinear optically active copolymer with respect to the amount of the nonlinear optical compound prepared [%], and these values are shown in Table 1.

In addition, Table 1 shows the glass transition points of the prepared nonlinear optically active copolymers.

### [Table 1]

**Table 1**

| | | | Example | | | | | | | | | | | | Comparative Example | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 |
| Precursor polymer monomer: component [molar ratio] | N-substituted maleimide | PM | 50 | 50 | | | | | | | | | 75 | 25 | | |
| | | CM | | | 50 | | | 50 | 50 | 50 | 50 | 50 | | | | |
| | | EM | | | | 50 | | | | | | | | | | |
| | | BM | | | | | 50 | | | | | | | | | |
| | NCO-containing (meth)acrylic acid derivative | NCO | 50 | 50 | 50 | 50 | 50 | 25 | 25 | 50 | | | 25 | 75 | 50 | 25 |
| | | Neg | | | | | | | | | 50 | 30 | | | | |
| | Other monomers | Sty | | | | | | 25 | | | | | | | | |
| | | Ada | | | | | | | 25 | | | 20 | | | 50 | 75 |
| Preparation amount of nonlinear optical compound (1) [% by mass]*¹ | | | 50 | 60 | 50 | 50 | 50 | 40 | 40 | | | | 40 | 50 | 50 | 30 |
| Preparation amount of nonlinear optical compound (2) [% by mass]*¹ | | | | | | | | | | 50 | 50 | 40 | | | | |
| Introduction rate of nonlinear optical compound copolymer [% by mass]*² | | | 49.5 | 55.8 | 48.3 | 50.1 | 49.6 | 36.5 | 37.8 | 45.1 | 46.2 | 36.4 | 36.7 | 48 | 41.6 | 24.9 |
| Reaction conversion rate of nonlinear optical compound [%]*³ | | | 99 | 93 | 96.6 | 100 | 99.2 | 91.25 | 94.5 | 90.2 | 92.4 | 91 | 91.8 | 96 | 83.2 | 83 |
| Glass transition point of nonlinear optically active copolymer [°C] | | | 177 | 181 | 175 | 166 | 176 | 191 | 192 | 186 | 160 | 164 | 182 | 161 | 138 | 170 |

| | | | | | | | | | | | | | | | | |
|---|---|---|---|---|---|---|---|---|---|---|---|---|---|---|---|---|
| *1 The preparation amount of the nonlinear optical compound with respect to a total amount of the precursor polymer and the nonlinear optical compound [% by mass] *2 The content of the structure derived from the nonlinear optical compound in the nonlinear optically active copolymer determined from the maximum absorption intensity of the ultraviolet-visible near-infrared absorption spectrum [% by mass] *3 Reaction conversion rate [%] of nonlinear optical compound = {introduction rate [%] of nonlinear optical compound in nonlinear optically active copolymer/preparation amount of nonlinear optical compound [%]}×100 | | | | | | | | | | | | | | | | |

As shown in Table 1, when various N-substituted maleimides and NCO-containing (meth)acrylic acid derivatives were used as precursor polymer monomer components or when other monomers were used, the nonlinear optically active copolymers obtained in Examples 1 to 12 all had high glass transition points (Tg) of 160°C or higher. Among these, in Examples 1 to 5, 8, 9, and 12, regardless of the type of the nonlinear optical compound, both a high introduction rate exceeding 40% and a high glass transition point could be achieved.

On the other hand, in comparative examples, when the introduction rate of the nonlinear optical compound was as low as less than 25%, the glass transition point was high (Comparative Example 2), and when the introduction rate of the nonlinear optical compound was more than 40%, the glass transition point was lower than 140°C, and it was not possible to achieve both a high glass transition point and an increase in the amount of nonlinear optically active moieties introduced.

## Claims

1. A nonlinear optically active copolymer containing at least a repeating unit A of Formula [1] and a repeating unit B of Formula [2] having a nonlinear optically active moiety in the same molecule: 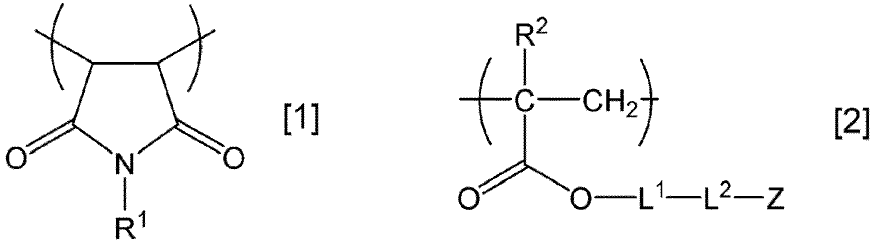 (wherein R¹ is a C₁₋₆ alkyl group, a C₇₋₁₂ aralkyl group, a C₄₋₈ cycloalkyl group, a C₆₋₁₄ aliphatic crosslinked ring group or a C₆₋₁₄ aryl group,
R² is a hydrogen atom or a methyl group,
L¹ is a C₁₋₃₀ divalent hydrocarbon group that arbitrarily contains an ether bond and/or an ester bond,
L² is * -NHC(=O)O-, * -C(=O)NH- or * -C(=O)O- (* is a coupling end with respect to L¹), and
Z is an atomic group that exhibits nonlinear optical activity).

2. The nonlinear optically active copolymer according to claim 1, wherein the nonlinear optically active copolymer contains a proportion of 20 to 80 mol% of the repeating unit A of Formula [1] in the same molecule.

3. The nonlinear optically active copolymer according to claim 1 or 2,
wherein L² is * -NHC(=O)O- (* is a coupling end with respect to L¹).

4. The nonlinear optically active copolymer according to any one of claims 1 to 3,
wherein R¹ is a C₁₋₃ alkyl group, a C₇₋₁₀ aralkyl group, a C₆₋₈ cycloalkyl group, a C₈₋₁₂ aliphatic crosslinked ring group, or a C₆₋₁₀ aryl group.

5. The nonlinear optically active copolymer according to any one of claims 1 to 4,
wherein Z is an atomic group having a furan ring group of Formula [3]: 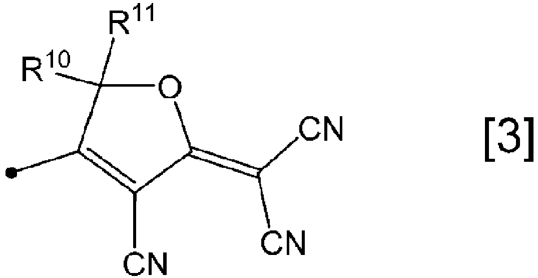 (wherein R¹⁰ and R¹¹ are each independently a hydrogen atom, a C₁₋₅ alkyl group, a C₁₋₅ haloalkyl group, or a C₆₋₁₀ aryl group, and a black dot indicates a bond with a residual structure constituting the atomic group Z that exhibits nonlinear optical activity).

6. The nonlinear optically active copolymer according to claim 5,
wherein Z is an atomic group of a structure of Formula [4] or Formula [5] (in any of R⁴ to R⁹, one hydrogen atom is removed in these chemical formulas): 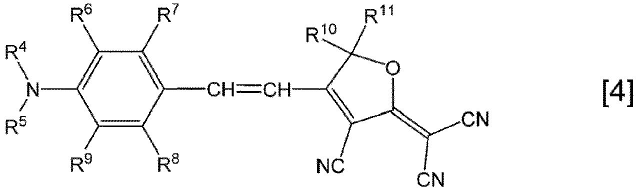 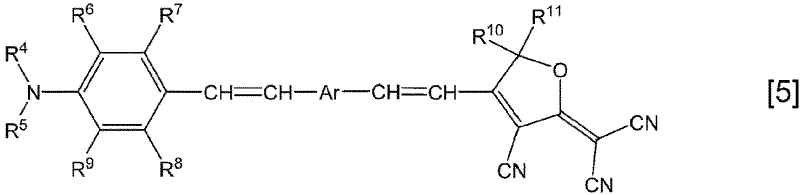 (wherein R⁴ and R⁵ are each independently a hydrogen atom, a C₁₋₁₀ alkyl group that arbitrarily has a substituent, or a C₆₋₁₀ aryl group that arbitrarily has a substituent,
R⁶ to R⁹ are each independently a hydrogen atom, a C₁₋₁₀ alkyl group, a hydroxy group, a C₁₋₁₀ alkoxy group, a C₂₋₁₁ alkylcarbonyloxy group, a C₄₋₁₀ aryloxy group, a C₅₋₁₁ arylcarbonyloxy group, a silyloxy group having a C₁₋₆ alkyl group and/or phenyl group, or a halogen atom,
R¹⁰ and R¹¹ each independently have the same meanings as above, and
Ar is a divalent aromatic group of Formula [6] or Formula [7]); and 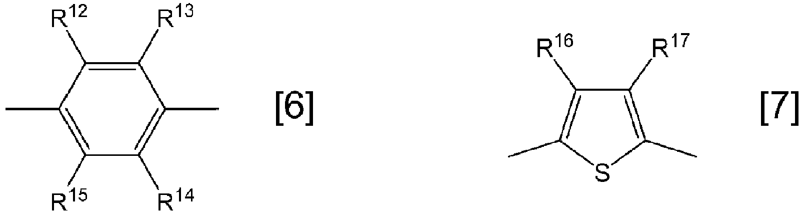 (wherein R¹² to R¹⁷ are each independently a hydrogen atom, a C₁₋₁₀ alkyl group that arbitrarily has a substituent, or a C₆₋₁₀ aryl group that arbitrarily has a substituent).

7. The nonlinear optically active copolymer according to claim 6,
wherein Z is an atomic group of a structure of Formula [4] or Formula [5] (in either R⁴ or R⁵, one hydrogen atom is removed in these chemical formulas).

8. An organic nonlinear optical material comprising the nonlinear optically active copolymer according to any one of claims 1 to 7 as a part of the material.

9. An electro-optical element comprising the nonlinear optically active copolymer according to any one of claims 1 to 7.

10. An optical switching element comprising the nonlinear optically active copolymer according to any one of claims 1 to 7.

11. A varnish comprising the nonlinear optically active copolymer according to any one of claims 1 to 7.

12. A method of producing an organic nonlinear optical material, the method comprising:
a process of applying the varnish according to claim 11 on a surface of a substrate or on an outermost surface of a single layer or multiple layers laminated on the substrate to obtain a coating film; and
a process of applying an electric field to the coating film under heating to orient an atomic group that exhibits nonlinear optical activity in the coating film.
